# EUROPEAN PATENT SPECIFICATION

(11) **EP 3 693 502 B1**
(45) Date of publication and mention of the grant of the patent: **25.12.2024**
(21) Application number: 20155937.4
(22) Date of filing: 06.02.2020
(51) Int. Cl.: D06F 34/10, G06F 1/3287, D06F 33/46, D06F 34/05, D06F 34/14, D06F 101/00, D06F 105/50

(54) **DEVICE FOR CONTROLLING A LAUNDRY TREATING APPARATUS AND LAUNDRY TREATING APPARATUS HAVING SAME**
VORRICHTUNG ZUR STEUERUNG EINER WÄSCHEBEHANDLUNGSVORRICHTUNG UND WÄSCHEBEHANDLUNGSVORRICHTUNG DAMIT
DISPOSITIF DE COMMANDE D'APPAREIL DE TRAITEMENT DE LINGE ET APPAREIL DE TRAITEMENT DE LINGE LE COMPORTANT

(30) Priority: 07.02.2019 KR 20190014600
(43) Date of publication of application: 12.08.2020
(73) Proprietor: LG Electronics Inc., 07336 SEOUL (KR)
(72) Inventor: SON, Junyoung, 08592 Seoul (KR); SON, Jinhwan, 08592 Seoul (KR); CHEON, Kangwoon, 08592 Seoul (KR)
(74) Representative: Ter Meer Steinmeister & Partner

(56) References cited:
- EP-A1- 3 252 204
- EP-A1- 3 301 214
- DE-A1- 102006 029 708
- US-A1- 2014 042 819

## Description

### BACKGROUND

### 1. Technical Field

The present invention relates to a device for controlling a laundry treating apparatus and a laundry treating apparatus having the same.

### 2. Description of the Related Art

The related art of the present invention relates to a power supply control of a laundry treating apparatus.

A laundry treating apparatus refers to every apparatus which is configured to manage or treat clothes, such as washing, drying or removing wrinkles on garments, bedding, and the like, at home or at a place like a dry cleaner. Laundry treating apparatuses include a washing machine or washer, a dryer, a washer-dryer, and the like.

A washing machine is a machine for washing clothes or bedding, and a dryer is a machine for drying clothes or bedding by removing moisture. A washer-dryer is a machine having both a washing function and a drying function.

On the other hand, the dryer supplies hot air to an object to be treated, such as clothes or bedding put into a drum, to evaporate moisture contained in the object. Air which is discharged out of the drum after evaporating the moisture from the object contains such moisture so as to be in a hot and humid state.

Such laundry treating apparatus may operate through a voice recognition system (or component) or a remote control system (or component). The laundry treating apparatus performs an operation according to an input command when a voice command is input through the voice recognition system or a control command is input through the remote control system. In order to perform the operation through the voice recognition system or the remote control system, a control part which controls an operation of the laundry treating apparatus should be in an idle (standby, waiting) state. In this instance, the control part controls a component, which performs the operation through the voice recognition system or remote control system to be in an idle state by supplying power to the component. Even while the component is in the idle state, the component consumes power, causing consumption of standby power. If the consumption of standby power is increased, power is consumed even while the laundry treating apparatus is not driven, thereby lowering energy efficiency. The unnecessary power consumption caused even while the operation through the voice recognition system or the remote control system is not carried out results in lowering effectiveness and efficiency of the laundry treating apparatus. In particular, in an environment requiring for standby power consumption of a predetermined level or lower, a problem may arise that the use of the laundry treating apparatus is limited.

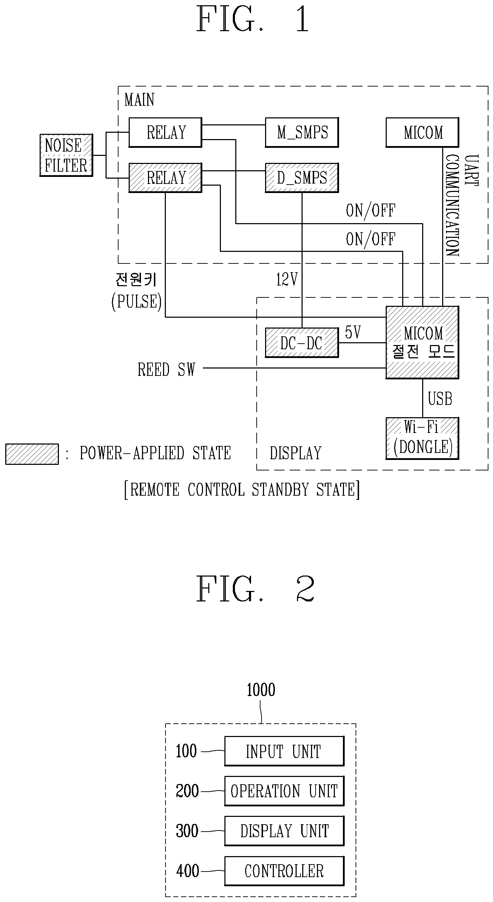

To solve such standby power problem, the related art, as illustrated in FIG. 1, has proposed a device for controlling a laundry treating apparatus, in which a display unit of the control device controls ON/OFF of both a main unit and the display unit itself through relays. The display turns off all of the relays when the laundry treating apparatus is off, while turning on its relay and turning off only the relay of the main unit in a standby state for a remote control, thereby waiting

for the remote control. In the remote control standby state, the display unit receives a Wi-Fi signal so as to enable the remote control.

However, in the related art control device, the display unit controls power-on/off, and thereby there is a limit that a power supply of the control device circuit is controllable only by a power button when the control device is off. In addition, a MICOM of the display unit is ARM-based MICOM, which has a limit in reducing standby power merely by a saving mode. In addition, when an additional load, such as a communication module, a speaker or a microphone, which consumes power, is further provided in the voice recognition system, standby power is supplied even to the additional load in an idle state. As a result, standby power consumption is inconsistent or it is difficult to reduce the standby power down to a predetermined reference value.

That is, in the related art, a technique for efficiently reducing the standby power of the laundry treating apparatus in a standby state for the voice recognition or the remote control has not been proposed, and the use/application of the laundry treating apparatus has been limited due to those problems.

US 2014/042819 A1 discloses an electronic apparatus including a power board, a remote-controller receiving board and a mainboard. The power board is configured for converting public electricity into a standby voltage and a main power voltage. The remote-controller receiving board, coupled with the power board, is configured to be operated with the standby voltage. When the remote-controller receiving board receives a control signal from a remote controller, the remote-controller receiving board sends a power-switching signal to the power board. The power board starts or stops supplying the main power voltage according to the power-switching signal. The mainboard, coupled with the power board, is configured to be operated with the main power voltage.

DE 10 2006 029708 A1 discloses a device for controlling the standby power of a washing machine that is installed at a remote location and can be remotely controlled by a user. The device comprises a communication unit, a power supply unit and a control unit. The communication unit enables data communication with a monitoring device to remotely control and monitor the washing machine. The power supply unit supplies the washing machine with the required power. If a wash cycle is completed or a power-off command is entered through the communication unit, the control unit determines whether to supply power to the washing machine according to a user setting and controls the power supply according to this determination. The user can set whether to apply power when a wash cycle has been completed or when an off command has been entered, providing simple and efficient standby power control.

### SUMMARY

The present invention aims to improve or overcome the limitations of the related art.

In particular, one aspect of the present invention is to provide a device for controlling a laundry treating apparatus, capable of reducing standby power consumed in a standby state for voice recognition or remote control, and a laundry treating apparatus having the same.

Another aspect of the present invention is to provide a device for controlling a laundry treating apparatus, capable of smoothly performing an operation for waiting for voice recognition or remote control while reducing standby power consumption, and a laundry treating apparatus having the same.

A device for controlling a laundry treating apparatus according to the present invention for solving those problems described above may control a power supply and an operation of the laundry treating apparatus according to a driving state of the laundry treating apparatus.

Specifically, the control device may be provided with a driving controller for controlling a power supply of the laundry treating apparatus by utilizing/applying an Artificial Intelligence (AI) technology, so as to control the power supply according to a turn-off state, a standby state, and a turn-on state of the laundry treating apparatus.

Also, the driving controller may receive a signal for a voice recognition control and a remote control with respect to the laundry treating apparatus and control the power supply based on the signal, in a standby state of the laundry treating apparatus.

That is, in a device for controlling a laundry treating apparatus and a laundry treating apparatus having the same according to the present invention, a control part performing power supply and operation control for the laundry treating apparatus may be provided with a driving controller for controlling the power supply, such that the power supply can be controlled according to a driving state of the laundry treating apparatus.

Technical features as described above can be embodied in a control device, a control system, a control method, or the like for a laundry treating apparatus, or a control device, a control system, a control method, or the like for an Artificial Intelligence (AI) laundry treating apparatus, and this specification provides a device for controlling a laundry treating apparatus and a laundry treating apparatus having the same, capable of solving those problems described above.

A device for controlling a laundry treating apparatus according to the present invention having the technical features as described above is configured to control a laundry treating apparatus, which includes an input unit configured to receive a signal input for an operation command, an operation unit configured to perform the operation according to the signal, and a display unit configured to display information related to the operation.

The device includes an operation controller configured to receive power for driving the laundry treating apparatus from an external power supply source and control the operation unit to control the operation of the laundry treating apparatus, a display controller configured to be driven by power transferred from the operation controller and control the display unit to display the information related to the operation of the laundry treating apparatus, and a driving controller configured to be driven by power transferred from the operation controller and control a power supply to each of the input unit, the operation controller, and the display controller according to a driving state of the laundry treating apparatus, so as to control an operation of each of the input unit, the operation controller, and the display controller.

In addition, a laundry treating apparatus according to the present invention having the technical features as described includes an input unit configured to receive a signal input for an operation command, an operation unit configured to perform the operation according to the signal, a display unit configured to display information related to the operation, and a controller configured to control the operation unit and the display unit so as to control the operation.

The controller includes an operation controller configured to receive power for driving the laundry treating apparatus from an external power supply source and control the operation unit to control the operation of the laundry treating apparatus, a display controller configured to be driven by power transferred from the operation controller and control the display unit to display information related to the laundry treating apparatus, and a driving controller configured to be driven by power transferred from the operation controller and control a power supply to each of the input unit, the operation controller, and the display controller according to a driving state of the laundry treating apparatus, so as to control an operation of each of the input unit, the operation controller, and the display controller.

In a device for controlling a laundry treating apparatus and a laundry treating apparatus having the same according to the present invention, a control part which controls a power supply and an operation of the laundry treating apparatus is provided with a driving controller for controlling the power supply thereof according to a driving state of the laundry treating apparatus, thereby reducing standby power consumed during a standby state of the laundry treating apparatus for a voice recognition control or a remote control.

Preferably, the input unit comprises at least one of: a communication portion configured to communicate with a communication target device of the laundry treating apparatus to receive a control signal input for the operation command from the communication target device; and a voice recognition portion configured to recognize the operation command based on a voice signal when the voice signal is input for the operation command.

Preferably, the input unit may stop a power transfer when the laundry treating apparatus is turned off
Preferably, the input unit may be driven by receiving power when the laundry treating apparatus is in a standby state.

Preferably, the operation controller may comprise at least one of: a first opening and closing portion configured to connect or disconnect the power supply source to or from a first power supply portion; the first power supply portion configured to convert the power supplied from the power supply source into first power; a second power supply portion configured to convert the power supplied from the power supply source into second power; and an operation performing portion configured to be driven by receiving the first power from the first power supply portion so as to perform the control of the operation controller.

Preferably, the first power supply portion may receive the power supplied from the power supply source when the power supply source is connected thereto by the first opening and closing portion, converts the received power into the first power.

Preferably, the first power supply portion may supply the first power to the operation unit and the operation performing portion.

Preferably, the second power supply portion may receive the power from the power supply source at all times, and/or may convert the received power into the second power, and/or may transfer the second power to the display unit and the driving controller.

Preferably, the operation performing portion may communicate with the driving controller to perform the control of the operation controller according to a result of the communication.

Preferably, the display controller may comprise a conversion portion configured to receive power from the driving controller and convert the power into driving power of the display controller; and/or a display performing portion configured to be driven by receiving the driving power from the conversion portion to perform the control of the display controller.

Preferably, the conversion portion may receive the power from the driving controller when the laundry treating apparatus is turned on, and/or may convert the received power into the driving power, and/or may supply the driving power to the display performing portion.

Preferably, the display performing portion may communicate with the input unit and the driving controller to perform the control of the operation controller according to a result of the communi cati on
The driving controller comprises a supply portion configured to receive power transferred from the operation controller and convert the received power into driving power of the driving controller; a second opening and closing portion configured to connect or disconnect the operation controller to or from the display controller; and a third opening and closing portion configured to connect or disconnect the supply portion to or from the input unit; and a driving performing portion configured to be driven by receiving the driving power from the supply portion to perform the control of the driving controller.

Preferably, the supply portion may receive power from the driving controller at all times, and/or may convert the received power into the driving power, and/or may supply the driving power to the driving performing portion.

The driving performing portion controls each of the second opening and closing portion and the third opening and closing portion according to a driving state of the laundry treating apparatus.

Preferably, the second opening and closing portion may disconnect the operation controller from the display controller when the laundry treating apparatus is turned off and is in a standby state, and/or may connect the operation controller to the display controller when the laundry treating apparatus is turned on.

The third opening and closing portion disconnects the supply portion from the input unit when the laundry treating apparatus is turned off and is in the standby state, and/or may connect the supply portion to the input unit when the laundry treating apparatus is turned on.

In a further aspect, a laundry treating apparatus is provided comprising: an input unit configured to receive a signal input for an operation command; an operation unit configured to perform the operation according to the signal; a display unit configured to display information related to the operation; and a controller configured to control the operation unit and the display unit so as to control the operation.

The controller is the device for controlling the laundry treating apparatus as described above.

Accordingly, in the device for controlling the laundry treating apparatus and the laundry treating apparatus having the same, the standby power consumed during the standby state of the laundry treating apparatus for the voice recognition control or the remote control can be reduced and thus an increase in standby power can be secured for an additional load.

In addition, in the device for controlling the laundry treating apparatus and the laundry treating apparatus having the same, the standby power can be reduced down to a predetermined reference level or lower, which may allow the laundry treating apparatus to be used under a specific environment requiring for standby power of the predetermined reference level or lower.

In the device for controlling the laundry treating apparatus and the laundry treating apparatus having the same according to the present invention, as the control part which controls the power supply and the operation of the laundry treating apparatus may be provided with the driving controller for controlling the power supply thereof according to the driving state of the laundry treating apparatus, the standby power consumed can be reduced and also a waiting or standby operation for the voice recognition or remote control can be smoothly carried out.

In the device for controlling the laundry treating apparatus and the laundry treating apparatus having the same according to the present invention, as the control part which controls the power supply and the operation of the laundry treating apparatus may be provided with the driving controller for controlling the power supply thereof according to the driving state of the laundry treating apparatus, unnecessary consumption of the standby power due to the standby operation for the voice recognition or remote control can be prevented.

As a result, the device for controlling the laundry treating apparatus and the laundry treating apparatus having the same according to the present invention can secure improvement of limitations of the related art, and increase stability, reliability, applicability, efficiency, and effectiveness in a technical field of the laundry treating apparatus and laundry treating apparatuses employing Artificial Intelligence (Al).

### BRIEF DESCRIPTION OF THE DRAWINGS

FIG. 1 is an exemplary view illustrating a power-applied state during a standby state for a remote control of a laundry treating apparatus according to the related art.
FIG. 2 is a block diagram illustrating a configuration of a laundry treating apparatus in accordance with one embodiment of the present disclosure.
FIG. 3 is a block diagram illustrating a configuration of a device for controlling a laundry treating apparatus in accordance with one embodiment of the present disclosure.
FIG. 4 is a block diagram illustrating functional relationship of components provided in a device for controlling a laundry treating apparatus according to the present disclosure.
FIG. 5 is a block diagram illustrating a detailed configuration of a device for controlling a laundry treating apparatus and the laundry treating apparatus having the device in accordance with one embodiment of the present disclosure.
FIG. 6A is an exemplary view illustrating a power-applied state when a laundry treating apparatus is turned off, in a device for controlling the laundry treating apparatus and the laundry treating apparatus having the device in accordance with one embodiment of the present disclosure.
FIG. 6B is an exemplary view illustrating a power-applied state upon waiting for voice recognition and remote control in a device for controlling a laundry treating apparatus and a laundry treating apparatus having the same in accordance with one embodiment of the present disclosure.

### DETAILED DESCRIPTION OF THE EMBODIMENTS

It is noted that the present invention is defined by independent claim 1.

Hereinafter, embodiments disclosed herein will be described in detail with reference to the accompanying drawings, and the same or similar components are denoted by the same reference numerals and redundant description thereof will be omitted. In describing the present invention, if a detailed explanation for a related known function or construction is considered to unnecessarily divert the gist of the present disclosure, such explanation has been omitted but would be understood by those skilled in the art.

The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

Hereafter, a device for controlling a laundry treating apparatus (hereinafter, referred to as a control device) according to the present disclosure will be described.

As illustrated in FIG. 2, the control device refers to a device for controlling a laundry treating apparatus 1000. The laundry treating apparatus 1000 may include an input unit 100 to receive a signal for an operation command, an operation unit 200 to perform the operation according to the signal, and a display unit 300 to display information related to the operation.

The control device may be a controller 400 included in the laundry treating apparatus 1000.

Here, the controller 400 is a control module which is included in the laundry treating apparatus 1000 to control the operation unit 200 and the display unit 300 so as to control the operation of the laundry treating apparatus 1000.

The control device 400 may be made of at least one substrate.

The control device 400 may include a plurality of circuit modules on the at least one substrate.

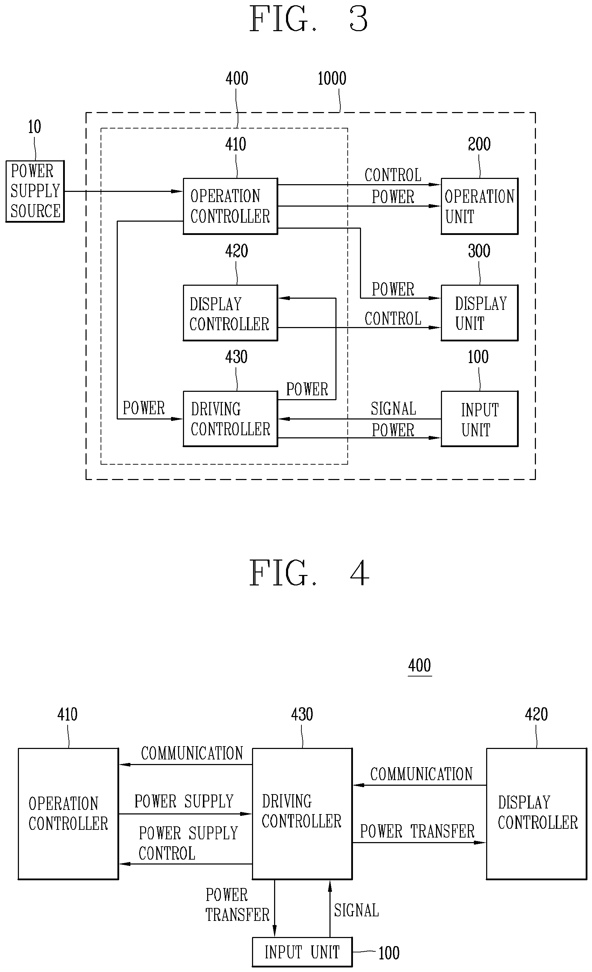

As illustrated in FIG. 3, the control device 400 may include an operation controller 410, a display controller 420, and a driving controller 430.

Each of the operation controller 410, the display controller 420, and the driving controller 430 included in the control device 400 may be a circuit module including a plurality of circuit elements.

The operation controller 410 may receive power for driving the laundry treating apparatus 1000 from an external power supply source 10, and controls the operation unit 200 to perform the operation of the laundry treating apparatus 1000. That is, the operation controller 410 may be a control module that controls the operation unit 200 to perform the operation of the laundry treating apparatus 1000. The operation controller 410 may be driven by the power supplied from the power supply source 10. That is, the operation controller 410 may be driven based on the power supplied from the power supply source 10 to control the operation unit 200. The operation controller 410 may control the operation unit 200 according to the signal. The operation controller 410 may supply power to each of the operation unit 200 and the display unit 300 to drive each of the operation unit 200 and the display unit 300. In other words, the operation controller 410 may supply power to each of the operation unit 200 and the display unit 300 to drive the operation unit 200 and the display unit 300. The operation controller 410 may receive power from the power supply source 10 and transfer the power to each of the operation unit 200 and the display unit 300. The operation controller 410 may also transfer power to the driving controller 430 to drive the driving controller 430. That is, the operation controller 410 may transfer power to the driving controller 430 so that the driving controller 430 can operate.

The display controller 420 is driven by power received from the operation controller 410 so as to control the display unit 300 to display information related to the laundry treating apparatus 1000. That is, the display controller 420 may be a control module that controls the display unit 420 to display information related to the laundry treating apparatus 1000. The display controller 420 may be driven by power received from the driving controller 430. That is, the display controller 420 may be driven based on power received from the driving controller 430 to control the display unit 300.

The driving controller 430 is driven by power received from the operation controller 410. The operation controller 430 may control a power supply to the input unit 100, the operation controller 410, and the display controller 420 according to a driving or operation state of the laundry treating apparatus 1000, to control the input unit 100, the operation controller 410, and the display controller 420. That is, the driving controller 430 may be a control module for controlling a power supply to each of the input unit 100, the operation controller 410, and the display controller 420 so as to drive each of the input unit 100, the operation controller 410, and the display controller 420. Accordingly, the driving controller 430 is driven by power supplied from the operation controller 410 to control the power supply to the input unit 100, the operation controller 410, and the display controller 420, so that the control device 400 can operate.

Functions performed among the operation controller 410, the display controller 420, and the driving controller 430 may have relationship as illustrated in FIG. 4.

The operation controller 410 may communicate with the driving controller 430 to perform transmission and reception of information related to a driving or operation state with the driving controller 430. The operation controller 410 may control the operation unit 200 according to a result of the communication with the driving controller 430. The operation controller 410 may receive the signal from the driving controller 430 and control the operation unit 200 according to the signal. The operation controller 410 may supply power to the driving controller 430, and thereafter the power supply may be controlled by the driving controller 430. That is, when the driving controller 430 is driven by power supplied from the operation controller 410, the power supply may be controlled by the driving controller 430.

The display controller 420 may communicate with the driving controller 430 to perform transmission and reception of information related to a driving or operation state with the driving controller 430. The display controller 420 may control the display unit 300 according to a result of the communication with the driving controller 430. The display controller 420 may be driven by power received from the driving controller 430. That is, when the driving controller 430 is driven by receiving power from the operation controller 410, the display controller 420 may be driven by receiving power from the driving controller 430.

The driving controller 430 may communicate with the operation controller 410 and the display controller 420 to transmit and receive information related to an operation state. The driving controller 430 may control an operation of the control device 400 according to a result of the communication with the operation controller 410 and the display controller 420. The driving controller 430 may be driven by receiving power from the operation controller 410. The operation controller 430 may be driven by receiving power from the operation controller 410 so as to transfer power to the input unit 100 and the display controller 420. That is, the driving controller 430 may control operations of the input unit 100 and the display controller 420 by transferring power received from the operation controller 410 to the input unit 100 and the display controller 420, respectively. The driving controller 430 may also be driven by power received from the operation controller 410 so as to control a power supply to the operation controller 410. That is, when the driving controller 430 is driven by power supplied from the operation controller 410, the driving controller 430 may control the operation of the operation controller 410 by controlling the power supply to the operation controller 410. The driving controller 430 may also receive a signal from the input unit 100. When a signal of an operation command is input to the input unit 100, the driving controller 430 may receive the signal from the input unit 100 and transmit the signal to the operation controller 410.

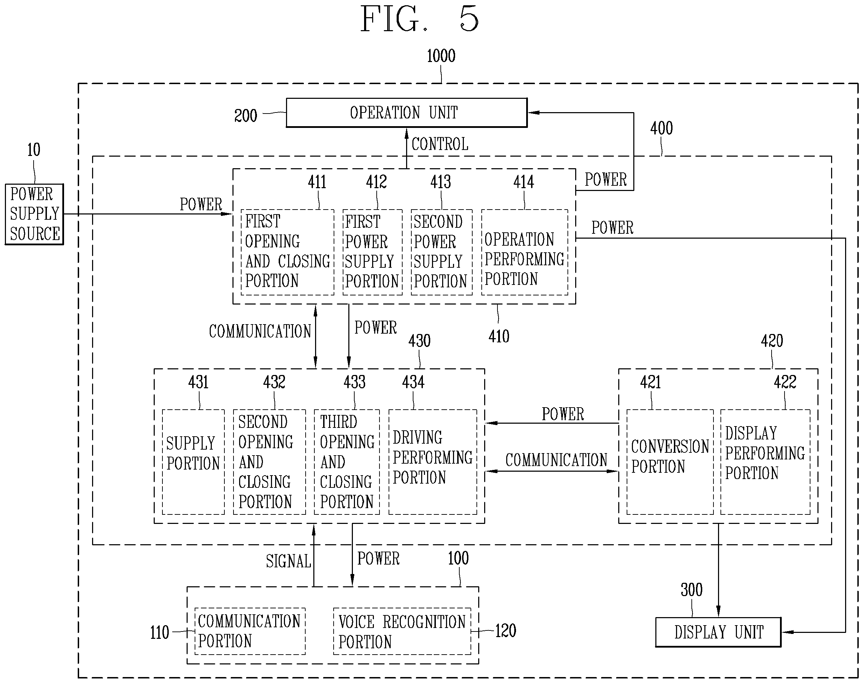

In the control device 400 including the operation controller 410, the display controller 420, and the driving controller 430, the driving controller 430 may control the power supply to each of the input unit 100, the operation controller 410, and the display controller 420 according to the driving state of the laundry treating apparatus 1000, thereby controlling the operation of the laundry treating apparatus 1000. For example, the driving controller 4430 may control the power supply to each of the input unit 100, the operation controller 410, and the display controller 420 according to a power-on/off (turn-on/off) mode, an idle or standby mode. For example, the driving controller 430 may control the power supply to each of the input unit 100, the operation controller 410, and the display controller 420, according to a state where the laundry treating apparatus 1000 is stopped in operation, a state where the laundry treating apparatus 1000 is in a standby state, or a state where the laundry treating apparatus 1000 starts to operate. Here, the state where the laundry treating apparatus 1000 is stopped in operation may be a power-off state of the laundry treating apparatus 1000. The state where the laundry treating apparatus 1000 is in the standby state may be a state where the laundry treating apparatus 1000 is waiting for the input of the signal through the input unit 100. Also, the state where the laundry treating apparatus 1000 starts to operate may be a power-on state of the laundry treating apparatus 1000 in response to the signal or a user's manipulation. Hereinafter, a detailed embodiment of the control device 400 which controls the power supply to each of the input unit 100, the operation controller 410, and the display controller 420 according to the driving state will be described with reference to FIG. 5.

As illustrated in FIG. 5, the control device 400 including the operation controller 410, the display controller 420, and the driving controller 430 may be included in the laundry treating apparatus 1000 to control the laundry treating apparatus 1000.

The input unit 100 may receive a signal for an operation command from outside. The input unit 100 may include at least one of a communication portion 110 to communicate with a communication target device of the laundry treating apparatus 1000, so as to receive a control signal for the operation command from the target device, and a voice recognition portion 120 to recognize an operation command based on a voice signal input for the operation command. That is, the input unit 100 may include at least one of the communication portion 110 and the voice recognition portion 120 so as to receive the control signal through the communication unit 110 or the voice signal through the voice recognition unit 120.

The communication portion 110 may receive the control signal through communication with the communication target device of the laundry treating apparatus 1000. Here, the communication target device may be a device which remotely controls the laundry treating apparatus 1000. For example, the target device may be a remote controller, a user terminal, or a voice recognition system cooperating with the laundry treating apparatus 1000, all of which can remotely control the laundry treating apparatus 1000. When the communication portion 110 receives the control signal, the communication portion 110 may transmit the control signal to the driving controller 430. The driving controller 430 may then transfer the control signal to the operation controller 410.

The voice recognition portion 120 may recognize the operation command based on the voice signal input through a voice recognition system provided in the laundry treating apparatus 1000. Here, the voice recognition system may be a voice recognition module including a microphone for receiving a voice signal. When the voice signal is received, the voice recognition portion 120 may recognize the operation command based on the voice signal and transmit the voice signal to the driving controller 430. The driving controller 430 may then transfer the voice signal to the operation controller 410.

As such, the input unit 100 which includes at least one of the communication portion 110 and the voice recognition portion 120 to receive the signal can be driven by receiving power from the driving controller 430. That is, when the driving controller 430 is driven by receiving power from the operation controller 410, the input unit 100 may be driven by receiving power from the driving controller 430.

The input unit 100 may not be supplied with power when the laundry treating apparatus 1000 is turned off, while being driven by receiving power during the standby state of the laundry treating apparatus 1000. That is, the driving controller 430 may stop the power transfer to the input unit 100 while the laundry treating apparatus 1000 is turned off, and transfer power to the input unit 100 while the laundry treating apparatus 1000 is in the standby state. Accordingly, the input unit 100 may be driven while the laundry treating apparatus 1000 is in the standby state, so as to receive the signal.

The operation controller 410 may be driven by power supplied from the power supply source 10 to control the operation unit 200, thereby controlling the operation of the laundry treating apparatus 1000. The operation controller 410 may include a first opening and closing portion 411 for connecting or disconnecting the power supply source 10 and a first power supply portion 412, the power supply unit 412 for converting power supplied from the power supply source 10 into first power, a second power supply portion 413 for converting power supplied from the power supply source 10 into second power, and an operation performing portion 414 for controlling the operation controller 410 by receiving the first power from the first power supply portion 412.

The first opening and closing portion 411 may be provided between the power supply source 10 and the first power supply portion 412, so as to connect or disconnect the power supply source 10 to or from the first power supply portion 412. For example, the first opening and closing portion 411 may be a relay switch. The first opening and closing portion 411 may be normally open while closed during operation. That is, the first opening and closing portion 411 normally disconnects the power supply source 10 from the first power supply portion 412, while connecting the power supply source 10 to the first power supply portion 412 during operation. In this manner, the first opening and closing portion 411 can interrupt power supplied from the power supply source 10 to the first power supply portion 412. Accordingly, the power supply from the power supply source 10 to the first power supply portion 412 can be stopped when the power supply source 10 and the first power supply portion 412 are disconnected from each other, while power can be supplied from the power supply source 10 to the first power supply portion 412 when the power supply source 10 and the first power supply portion 412 are connected to each other. The first opening and closing portion 411 can be controlled by the driving controller 430 to connect or disconnect the power supply source 10 to or from the first power supply portion 412. The first opening and closing portion 411 may disconnect the power supply source 10 from the first power supply portion 412 when the laundry treating apparatus 1000 is turned off and is in the standby state, while connecting the power supply source 10 to the first power supply portion 412 when the laundry treating apparatus 1000 is turned on. That is, the driving controller 430 may control the first opening and closing portion 411 to be opened to disconnect the power supply source 10 from the first power supply portion 412 when the laundry treating apparatus 1000 is turned off or is in the standby state, while controlling the first opening and closing portion 411 to be closed to connect the power supply source 10 to the first power supply portion 412 when the laundry treating apparatus 1000 is turned on. Accordingly, the driving controller 430 may stop the power supply to the first power supply portion 412 when the laundry treating apparatus 1000 is turned off and is in the standby state, while supplying power to the first power supply portion 412 when the laundry treating apparatus 1000 is turned on.

The first power supply portion 412 may be connected to the power supply source 10 through the first opening and closing portion 412, so as to receive power from the power supply source 10. The first power supply portion 412 may be a power converter for converting power supplied from the power supply source 10 to the first power. For example, the first power supply portion 412 may be a Switching Module Power Supply (SMPS). The first power may refer to power for operating the operation unit 200. The first power may be DC power for operating the operation unit 200. That is, the first power supply portion 412 may convert power supplied from the power supply source 10 into the first power in the form of DC power. The first power supply portion 412 may receive power from the power supply source 10 and convert the received power into the first power when it is connected to the power supply source 10 by the first opening and closing portion 411, such that the first power can be supplied to the operation unit 200 and the operation performing portion 414. That is, the operation unit 200 and the operation performing portion 414 may receive the first power when the power supply source 10 and the first power supply portion 412 are connected to each other by the first opening and closing portion 411.

The second power supply portion 413 may be connected directly to the power supply source 10, so as to always receive power from the power supply source 10. The second power supply portion 412 may be a power converter for converting power supplied from the power supply source 10 to the second power. For example, the second power supply portion 412 may be a Switching Module Power Supply (SMPS). The second power may refer to power for operating the display unit 300. The second power may be DC power for operating the display unit 300. That is, the second power supply portion 413 may convert power supplied from the power supply source 10 into the second power in the form of DC power. The second power supply portion 413 may convert power, which is supplied from the power supply source 10 at all times, into the second power, and transfer the second power to the display unit 300 and the driving controller 430. That is, the display unit 300 and the driving controller 430 may receive the second power at all times.

The operation performing portion 414 may operate by receiving the first power from the first power supply portion 412. The operation performing portion 414 may be a control part that controls the operation unit 200 by receiving the first power. For example, the operation performing portion 414 may be a microcomputer (MICOM). That is, the first power may be power for operating the MICOM. Accordingly, the operation performing portion 414 may operate when it receives the first power supplied from the first power supply portion 412, and may not operate when it does not receive the first power from the first power supply portion 412. The operation performing portion 414 may control the operations of the first opening and closing portion 411, the first power source portion 412, and the second power source portion 413 when it operates by receiving the first power. That is, the first opening and closing portion 411, the first power supply portion 412, and the second power supply portion 413 may be controlled by the operation performing portion 414 when the operation performing portion 414 operates by receiving the first power. The operation performing portion 414 may communicate with the driving controller 430 to perform the control for the operation controller 410 according to a result of the communication. The operation performing portion 414 may receive the signal from the driving controller 430 and perform the control for the operation controller 410 according to the signal.

The display controller 420 may be driven by power received from the operation controller 410 through the driving controller 420, to control the display unit 300 to display information related to the laundry treating apparatus 1000. That is, the display controller 420 may be driven by receiving power from the driving controller 430 which has received the power from the operation controller 410. The display controller 420 may operate by the power received from the driving controller 420. The display controller 420 may include a conversion portion 421 to convert power received from the driving controller 430 into driving power of the display controller 420, and a display performing portion 422 to control the display controller 420 by receiving the driving power from the conversion portion 421.

The conversion portion 421 may be a power converter that converts power received from the driving controller 430 into the driving power. For example, the conversion portion 421 may be a DC-DC converter. The driving power may be power for operating the display performing portion 422. The conversion portion 421 may convert a voltage of the power received from the driving controller 430. For example, power of 12 V received from the driving controller 430 may be converted into driving power of 5 V. The conversion portion 421 may convert power, which is received from the driving controller 430, into the driving power, and supply the converted driving power to the display performing portion 422, when the laundry treating apparatus 1000 is turned on. Accordingly, the display performing portion 422 may operate by receiving the driving power when the laundry treating apparatus 1000 is turned on. On the other hand, the display performing portion 422 may not operate as it does not receive the driving power when the laundry treating apparatus 1000 is turned off and is in the standby state.

The display performing portion 422 may operate by receiving the driving power from the conversion portion 421. The display performing portion 422 may be a control part that operates by receiving the driving power so as to control the display unit 300. For example, the display performing portion 422 may be a microcomputer (MICOM). That is, the driving power may be power for operating the MICOM. Accordingly, the display performing portion 422 may operate when the driving power is supplied from the conversion portion 421, and may not operate when the driving power is not supplied from the conversion portion 421. The display performing portion 422 may communicate with the input unit 100 and the driving controller 430 to control the display controller 420 according to a result of the communication.

Accordingly, the driving controller 430 may be driven by power received from the operation controller 410 to control the operations of the operation controller 410 and the display controller 420, thereby controlling the operation of the control device 400. That is, the driving controller 430 may always receive power from the operation controller 410, and operate by the power received from the operation controller 410 at all times. The driving controller 430 may include a supply portion 431 to receive power from the operation controller 410 and convert the received power into driving power of the driving controller 430, a second opening and closing portion 432 to connect or disconnect the operation controller 410 and the display controller 420, a third opening and closing portion 433 to connect or disconnect the supply portion 431 and the input unit 100, and a driving performing portion 434 to operate by receiving the driving power from the supply portion 431 to control the driving controller 430.

The supply portion 431 may be a power converter that converts power received from the driving controller 430 into the driving power. For example, the supply portion 431 may be a DC-DC converter. The driving power may be power for operating the driving performing portion 434. The supply portion 431 may convert a voltage of power received from the driving controller 430. For example, power of 12 V received from the driving controller 430 may be converted into driving power of 5 V. The supply portion 431 may convert power, which is received from the driving controller 430 at all times, into the driving power, and supply the converted driving power to the display performing portion 434. Accordingly, the driving performing portion 434 may operate by receiving the driving power when the laundry treating apparatus 1000 is turned on, is in the standby state, and is turned off. The supply portion 431 may also deliver power to each of the display controller 420 and the input unit 100 according to the operations of the second opening and closing portion 432 and the third opening and closing portion 433.

The second opening and closing portion 432 may be an opening and closing mechanism which is disposed between the operation controller 410 and the display controller 420 to connect or disconnect the operation controller 410 to and from the display controller 420. For example, the second opening and closing portion 432 may be a trigger switch. The second opening and closing portion 432 may be normally open and closed during operation. That is, the second opening and closing portion 432 may normally disconnect the operation controller 410 from the display controller 420, and connect the operation controller 410 to the display controller 420 during operation. In this manner, the second opening and closing portion 432 can interrupt power supplied from the operation controller 410 to the display controller 420. Accordingly, power cannot be transferred from the operation controller 410 to the display controller 420 when the operation controller 410 and the display controller 420 are disconnected from each other, while power can be transferred from the operation controller 410 to the display controller 420 when the operation controller 410 and the display controller 420 are connected to each other. The second opening and closing portion 432 may be controlled by the driving performing portion 434 to connect or disconnect the operation controller 410 to or from the display controller 420. The second opening and closing portion 432 may be controlled by the driving performing portion 434 according to the driving state of the laundry treating apparatus 1000. That is, the driving performing portion 434 may control the second opening and closing portion 432 according to the driving state. The second opening and closing portion 432 may disconnect the operation controller 410 from the display controller 420 when the laundry treating apparatus 1000 is turned off and is in the standby state, while connecting the operation controller 410 to the display controller 420 when the laundry treating apparatus 1000 is turned on. That is, the driving performing portion 434 may control the second opening and closing unit 432 to be opened to disconnect the operation controller 410 from the display controller 420 when the laundry treating apparatus 1000 is turned off and is in the standby state, while controlling the second opening and closing portion 432 to be closed to connect the operation controller 410 to the display controller 420 when the laundry treating apparatus 1000 is turned on. Accordingly, the driving performing portion 434 may stop the power transfer to the display controller 420 when the laundry treating apparatus 1000 is turned off and is in the standby state, while transferring power to the display controller 420 when the laundry treating apparatus 1000 is turned on.

The third opening and closing portion 433 may be an opening and closing mechanism which is disposed between the supply portion 431 and the input unit 100 to connect or disconnect the supply portion 431 to or from the input unit 100. For example, the third opening and closing portion 433 may be a trigger switch. The third opening and closing portion 433 may be normally open and closed during operation. That is, the third opening and closing portion 433 may normally disconnect the supply portion 431 from the input unit 100, while connecting the supply portion 431 to the input unit 100 during operation. In this manner, the third opening and closing portion 433 can interrupt power transferred from the supply portion 431 to the input unit 100. Accordingly, power cannot be transferred from the supply portion 431 to the input unit 100 when the supply portion 431 and the input unit 100 are disconnected from each other, while power can be transferred from the supply portion 431 to the input unit 100 when the supply portion 431 and the input unit 100 are connected to each other. The third opening and closing portion 433 may be controlled by the driving performing portion 434 to connect or disconnect the supply portion 431 to or from the input unit 100. The third opening and closing portion 433 may be controlled by the driving performing portion 434 according to the driving state of the laundry treating apparatus 1000. That is, the driving performing portion 434 may control the third opening and closing portion 433 according to the driving state. The third opening and closing portion 433 may disconnect the supply portion 431 from the input unit 100 when the laundry treating apparatus 1000 is turned off and is in the standby state, while connecting the supply portion 431 to the input unit 100 when the laundry treating apparatus 1000 is turned on. That is, the driving performing portion 434 may control the third opening and closing portion 433 to be opened to disconnect the supply portion 431 from the input unit 100 when the laundry treating apparatus 1000 is turned off and is in the standby state, while controlling the third opening and closing portion 433 to be closed to connect the supply portion 431 to the input unit 100 when the laundry treating apparatus 1000 is turned on. Accordingly, the driving performing portion 434 may stop the power transfer to the input unit 100 when the laundry treating apparatus 1000 is turned off and is in the standby state, while supplying power to the input unit 100 when the laundry treating apparatus 1000 is turned on.

The driving performing portion 434 may operate by receiving the driving power from the supply portion 431. The driving performing portion 434 may be a control part that receives the driving power to control the operations of the first opening and closing portion 411, the second opening and closing portion 432, and the third opening and closing portion 433. For example, the driving performing portion 434 may be a microcomputer (MICOM). That is, the driving power may be power for operating the MICOM. Accordingly, the driving performing portion 434 can operate by receiving the driving power from the supply portion 431. The driving performing portion 434 may communicate with the input unit 100, the operation controller 410, and the display controller 420, to transmit a result of the communication to at least one of the input unit 100, the operation controller 410, and the display controller 420. The driving performing portion 434 may also receive a signal from the input unit 100. The driving performing portion 434 may receive the signal from the input unit 100 and transfer the signal to the operation controller 410. The driving performing portion 434 may change an operation mode according to the driving state of the laundry treating apparatus 1000. For example, the driving performing portion 434 may be set to a mode of stopping the operation of the laundry treating apparatus 1000 when the laundry treating apparatus 1000 is turned off, and set to a mode of maintaining the operation when the laundry treating apparatus 1000 is in the standby state, thereby controlling power consumption according to the driving state of the laundry treating apparatus 1000. The driving performing portion 434 may control each of the second opening and closing portion 432 and the third opening and closing portion 433 according to the driving state of the laundry treating apparatus 1000. The driving performing portion 434 may control the second opening and closing unit 432 to be opened to disconnect the operation controller 410 from the display controller 420 when the laundry treating apparatus 1000 is turned off and is in the standby state, while controlling the second opening and closing portion 432 to be closed to connect the operation controller 410 to the display controller 420 when the laundry treating apparatus 1000 is turned on. That is, the driving performing portion 434 may stop the power transfer to the display controller 420 when the laundry treating apparatus 1000 is turned off and is in the standby state, while transferring power to the display controller 420 when the laundry treating apparatus 1000 is turned on. The driving performing portion 434 may control the third opening and closing portion 433 to be opened to disconnect the supply portion 431 from the input unit 100 when the laundry treating apparatus 1000 is turned off and is in the standby state, while controlling the third opening and closing portion 433 to be closed to connect the supply portion 431 to the input unit 100 when the laundry treating apparatus 1000 is turned on. That is, the driving performing portion 434 may stop the power supply to the input unit 100 when the laundry treating apparatus 1000 is turned off and is in the standby state, while supplying power to the input unit 100 when the laundry treating apparatus 1000 is turned on.

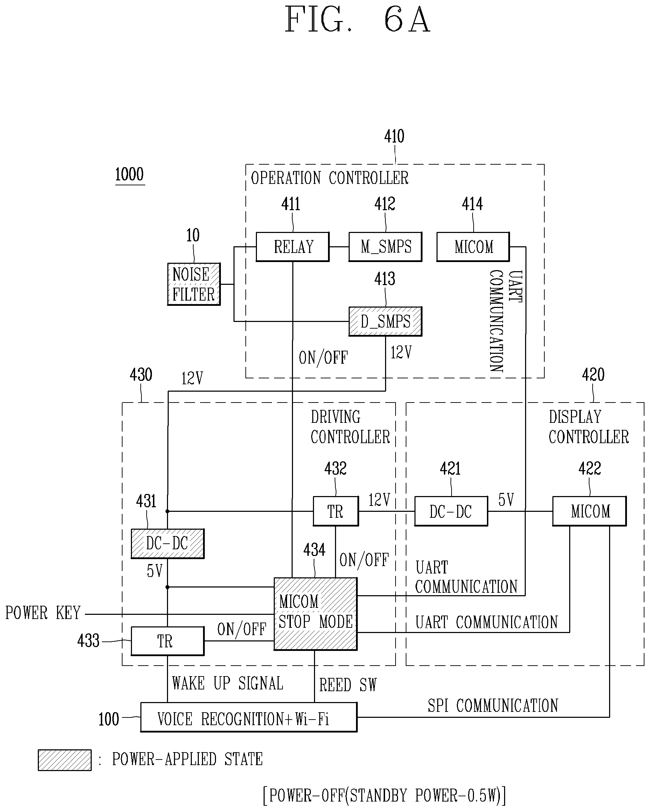

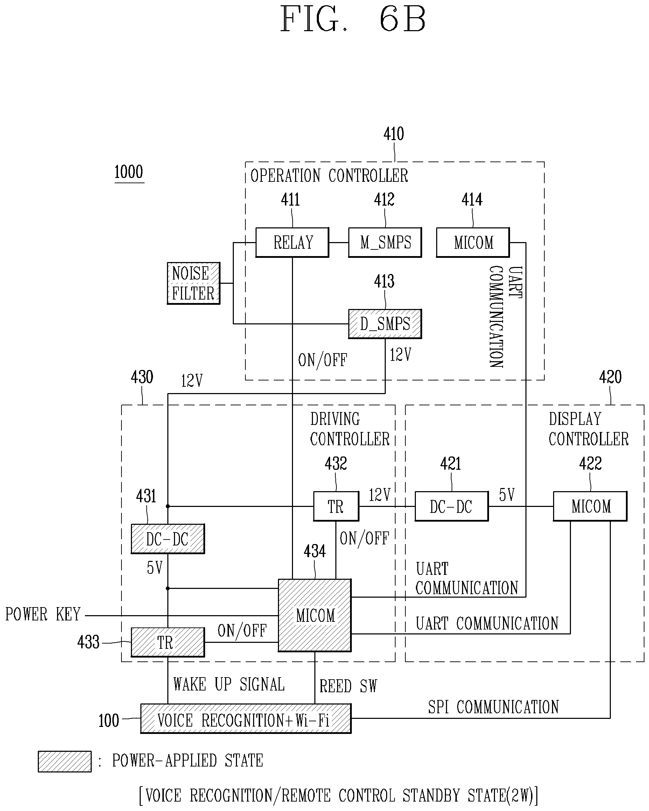

Hereinafter, a detailed embodiment of the control device 400 that controls the power supply according to the driving state of the laundry treating apparatus 1000 will be described with reference to FIGS. 6A and 6B. FIGS. 6A and 6B are exemplary views illustrating a circuit configuration according to a detailed embodiment of the control device 400. FIG. 6A illustrates a power supply state when the laundry treating apparatus 1000 is turned off, namely, is in an OFF state, and FIG. 6B illustrates a power supply state when the laundry treating apparatus 1000 is in the standby state, namely, when the input unit 100 is waiting for receiving the signal.

As illustrated in FIG. 6A, in the control device 400, the second power supply portion 413 of the operation controller 410 may convert power received from the power supply source 10 into the second power when the laundry treating apparatus 1000 is turned off, and transfer the second power to the supply portion 431 of the driving controller 430. The supply portion 431 may convert the power transferred from the second power supply portion 413 into driving power of the driving performing portion 434, and transfer the converted driving power to the driving performing portion 434. The driving performing portion 434 may then operate by the driving power received from the supply portion 431. In this case, the driving performing portion 434 may be driven in a STOP mode that stops its operation according to the turn-off of the laundry treating apparatus 1000. That is, when the laundry treating apparatus 1000 is turned off, power may be applied only to the second power supply portion 413, the supply portion 431, and the driving performing portion 434, so that standby power can be consumed only by the second power supply portion 413, the supply portion 431, and the driving performing portion 434. When the power supply is carried out in this manner, standby power consumed by the laundry treating apparatus 1000 may be 0.5 W or less.

As illustrated in FIG. 6B, in the control device 400, the second power supply portion 413 of the operation controller 410 may convert power received from the power supply source 10 into the second power when the laundry treating apparatus 1000 is in the standby state, and transfer the second power to the supply portion 431 of the driving controller 430. The supply portion 431 may convert the power transferred from the second power supply portion 413 into driving power of the driving performing portion 434, and transfer the converted driving power to the driving performing portion 434. The driving performing portion 434 may then operate by the driving power received from the supply portion 431. In this case, the driving performing portion 434 may be driven in a standby mode in which it operates according to the standby state of the laundry treating apparatus 1000. The driving performing portion 434 may be driven by the driving power transferred from the supply portion 431, and control the third opening and closing portion 434 to connect the supply portion 431 to the input unit 100. The third opening and closing portion 434 may connect the supply portion 431 to the input unit 100 under the control of the driving performing portion 434, and the supply portion 431 may transfer the driving power to the input unit 100 through the third opening and closing portion 434. The input unit 100 may be driven by the driving power transferred from the supply portion 431 through the third opening and closing portion 434 to wait for the input of the signal. That is, when the laundry treating apparatus 1000 is in the standby state, power may be applied only to the second power supply portion 413, the supply portion 431, the third opening and closing portion 433, the driving performing portion 434, and the input unit 100, so that standby power can be consumed only by the second power supply portion 413, the supply portion 431, the third opening and closing portion 433, the driving performing portion 434, and the input unit 100. When the power supply is carried out in this manner, standby power consumed by the laundry treating apparatus 1000 may be 2 W or less.

Hereinafter, a laundry treating apparatus according to the present disclosure will be described.

As illustrated in FIG. 2, the laundry treating apparatus 1000 may include an input unit 100 to receive a signal for an operation command, an operation unit 200 to perform the operation, a display unit 300 to display information related to the operation, and a controller 400 to control the operation unit 200 and the display unit 300 so as to control the operation.

Here, the controller 400 may be the control device 400 described above.

That is, as illustrated in FIG. 3, the clothes processing apparatus 1000 may include the operation unit 200 to receive power for operating the laundry treating apparatus 1000 from the power supply source 10 and control the operation of the laundry treating apparatus 1000 by controlling the operation unit 200, the display controller 420 driven by power received from the operation controller 410 to control the display controller 300 to display information related to the laundry treating apparatus 1000, and the controller 400 having the driving controller 430 driven by power transferred from the display unit 420 and the operation controller 410 to control the power supply to each of the input unit 100, the operation controller 410, and the display controller 420 according to the driving state of the laundry treating apparatus 1000. With the configuration, the controller 400 can be driven according to the driving state of the laundry treating apparatus 1000.

The operation controller 410 of the controller or control device 400 may receive power for driving the laundry treating apparatus 1000 from the power supply source 10, and control the operation unit 200 to control the operation of the laundry treating apparatus 1000. That is, the operation controller 410 may be a control module that controls the operation unit 200 to perform the operation of the laundry treating apparatus 1000. The operation controller 410 may be driven by power supplied from the power supply source 10. That is, the operation controller 410 may be driven based on the power supplied from the power supply source 10 to control the operation unit 200. The operation controller 410 may control the operation unit 200 according to the signal. The operation controller 410 may supply power to each of the operation unit 200 and the display unit 300 to drive each of the operation unit 200 and the display unit 300. That is, the operation controller 410 may supply power to each of the operation unit 200 and the display unit 300 to drive the operation unit 200 and the display unit 300. The operation controller 410 may receive power from the power supply source 10 and supply the power to each of the operation unit 200 and the display unit 300. The operation controller 410 may also supply power to the driving controller 430 to drive the driving controller 430. That is, the operation controller 410 may supply power to the driving controller 430 to drive the driving controller 430.

As illustrated in FIG. 4, the operation controller 410 may communicate with the driving controller 430 to transmit and receive information on an operation state. The operation controller 410 may control the operation unit 200 according to a result of the communication with the driving controller 430. The operation controller 410 may receive the signal from the driving controller 430 and control the operation unit 200 according to the signal. The operation controller 410 may supply power to the driving controller 430, and thereafter the power supply may be controlled by the driving controller 430. That is, when the driving controller 430 is driven by power supplied from the operation controller 410, the power supply may be controlled by the driving controller 430.

The display controller 420 of the controller 400 may be driven by the power transferred from the operation controller 410 so as to control the display unit 300 to display information related to the laundry treating apparatus 1000. That is, the display controller 420 may be a control module that controls the display unit 420 to display information related to the laundry treating apparatus 1000. The display controller 420 may be driven by power received from the driving controller 430. That is, the display controller 420 may be driven based on the power received from the driving controller 430 to control the display unit 300.

As illustrated in FIG. 4, the display controller 420 may communicate with the driving controller 430 to transmit and receive information on an operation state. The display controller 420 may control the display unit 300 according to a result of the communication with the driving controller 430. The display controller 420 may be driven by power received from the driving controller 430. That is, when the driving controller 430 is driven by receiving power from the operation controller 410, the display controller 420 may be driven by receiving power from the driving controller 430.

In the controller 400, the driving controller 430 may be driven by power received from the operation controller 410. The operation controller 430 may control the power supply to the input unit 100, the operation controller 410, and the display controller 420 according to an operating state of the laundry treating apparatus 1000, to control the input unit 100, the operation controller 410, and the display controller 420. That is, the driving controller 430 may be a control module for controlling the power supply to each of the input unit 100, the operation controller 410, and the display controller 420 so as to drive each of the input unit 100, the operation controller 410, and the display controller 420. Accordingly, the driving controller 430 may be driven by power supplied from the operation controller 410 to control the power supply to each of the input unit 100, the operation controller 410, and the display controller 420. As a result, the driving of the controller 400 may be controlled.

The driving controller 430, as illustrated in FIG. 4, may communicate with the operation controller 410 and the display controller 420 to transmit and receive information related to an operation state. The driving controller 430 may control an operation of the controller 400 according to a result of the communication with the operation controller 410 and the display controller 420. The driving controller 430 may be driven by receiving power from the operation controller 410. The operation controller 430 may be driven by receiving power from the operation controller 410 so as to transfer power to the input unit 100 and the display controller 420. That is, the driving controller 430 may control operations of the input unit 100 and the display controller 420 by transferring power received from the operation controller 410 to the input unit 100 and the display controller 420, respectively. The driving controller 430 may also be driven by power received from the operation controller 410 so as to control the power supply to the operation controller 410. That is, when the driving controller 430 is driven by power supplied from the operation controller 410, the driving controller 430 may control the operation of the operation controller 410 by controlling the power supply to the operation controller 410. The driving controller 430 may also receive the signal from the input unit 100. When the input unit 100 receives a signal for an operation command, the driving controller 430 may receive the signal from the input unit 100 and transmit the signal to the operation controller 410.

A detailed example of the laundry treating apparatus 1000 including the controller 400 may be as illustrated in FIG. 5.

In the laundry treating apparatus 1000, the input unit 100 may receive a signal for an operation command from outside. The input unit 100 may include at least one of a communication portion 110 to communicate with a communication target device of the laundry treating apparatus 1000, so as to receive a control signal for an operation command from the communication target device, and a voice recognition portion 120 to recognize an operation command based on a voice signal input for the operation command. That is, the input unit 100 may include at least one of the communication portion 110 and the voice recognition portion 120 so as to receive the control signal through the communication portion 110 or the voice signal through the voice recognition portion 120.

The communication portion 110 may receive the control signal through communication with the communication target device of the laundry treating apparatus 1000. Here, the communication target device may be a device which remotely controls the laundry treating apparatus 1000. When the communication portion 110 receives the control signal, the communication portion 110 may transmit the control signal to the driving controller 430. The driving controller 430 may then transfer the control signal to the operation controller 410.

The voice recognition portion 120 may recognize the operation command based on the voice signal input through the voice recognition mechanism provided in the laundry treating apparatus 1000. When the voice signal is received, the voice recognition portion 120 may recognize the operation command based on the voice signal and transmit the voice signal to the driving controller 430. The driving controller 430 may then transfer the voice signal to the operation controller 410.

As such, the input unit 100 which includes at least one of the communication portion 110 and the voice recognition portion 120 to receive the signal can be driven by receiving power from the driving controller 430. That is, when the driving controller 430 is driven by receiving power from the operation controller 410, the input unit 100 may be driven by receiving power from the driving controller 430.

The input unit 100 may not be supplied with power while the laundry treating apparatus 1000 is turned off, while being driven by receiving power while the laundry treating apparatus 1000 is in the standby state. That is, the driving controller 430 may stop the power delivery to the input unit 100 while the laundry treating apparatus 1000 is turned off, and transfer power to the input unit 1000 while the laundry treating apparatus 1000 is in the standby state. Accordingly, the input unit 100 may be driven while the laundry treating apparatus 1000 is in the standby state, so as to receive the signal.

In the laundry treating apparatus 1000, the operation unit 200 may be a component for performing the operation of the laundry treating apparatus 1000. The operation unit 200 may include a plurality of components for performing the operation of the laundry treating apparatus 1000. For example, the operation unit 200 may include at least one of a rotation portion such as a motor, a water supply portion, a drainage portion, and a heat supply portion. The operation unit 200 may operate by receiving power from the controller 400. The operation unit 200 may operate by receiving the first power from the first power supply portion 412 included in the controller 400. The operation unit 200 may be controlled by the controller 400. The operation unit 200 may be controlled by the operation controller 410 included in the controller 400. For example, the operation unit 200 may be controlled by the operation performing portion 414 included in the operation controller 410. The operation unit 200 may be controlled by the controller 400 to perform the operation of the laundry treating apparatus 1000.

In the laundry treating apparatus 1000, the display unit 300 may be a component for displaying information related to the operation of the laundry treating apparatus 1000. The display unit 300 may include a plurality of components for displaying the information related to the operation of the laundry treating apparatus 1000. For example, the display unit 300 may include at least one of a display, an input processor for processing information input through the display, and an output processor for processing information output through the display. The display unit 300 may operate by receiving power from the controller 400. The display unit 300 may operate by receiving the second power from the second power portion 413 included in the controller 400. The display unit 300 may be controlled by the controller 400. The display unit 300 may be controlled by the display controller 420 included in the controller 400. For example, the display unit 300 may be controlled by the display performing portion 422 included in the display controller 420. The display unit 300 may be controlled by the controller 400 to display the information related to the operation of the laundry treating apparatus 1000.

In the clothing processing apparatus 1000, the controller 400 may be a component for controlling the operation of the laundry treating apparatus 1000. The controller 400 may include a plurality of components for controlling the operation of the laundry treating apparatus 1000. For example, the controller 400 may include the operation controller 410, the display controller 420, and the driving controller 430. The controller 400 may be driven by power supplied from the power supply source 10. The operation controller 410 of the controller 400 may receive power supplied from the power supply source 10, and the driving controller 430 may operate by the power transferred from the operation controller 410 so as to control the power supply to the operation controller 410 and the display controller 420. That is, the driving controller 430 may control the power supply of the controller 400.

In the controller 400, the operation controller 410 may be driven by power supplied from the power supply source 10 to control the operation unit 200, thereby controlling the operation of the laundry treating apparatus 1000. The operation controller 410 may include a first opening and closing portion 411 for connecting or disconnecting the power supply source 10 and a first power supply portion 412, the power supply unit 412 for converting power supplied from the power supply source 10 into first power, a second power supply portion 413 for converting power supplied from the power supply source 10 into second power, and an operation performing portion 414 for controlling the operation controller 410 by receiving the first power from the first power supply portion 412.

The first opening and closing portion 411 may be provided between the power supply source 10 and the first power supply portion 412, so as to connect or disconnect the power supply source 10 to or from the first power supply portion 412. The first opening and closing portion 411 can be controlled by the driving controller 430 to connect or disconnect the power supply source 10 to or from the first power supply portion 412. The first opening and closing portion 411 can disconnect the power supply source 10 from the first power supply portion 412 when the laundry treating apparatus 1000 is turned off and is in the standby state, while connecting the power supply source 10 to the first power supply portion 412 when the laundry treating apparatus 1000 is turned on.

The first power supply portion 412 may be connected to the power supply source 10 through the first opening and closing portion 412, so as to receive power from the power supply source 10. The first power supply portion 412 may be a power converter for converting power supplied from the power supply source 10 to the first power. When the first power supply portion 412 may receive power from the power supply source 10 and convert the received power into the first power when it is connected to the power supply source 10 by the first opening and closing portion 411, such that the first power can be supplied to the operation unit 20 and the operation performing portion 414.

The second power supply portion 413 may be connected directly to the power supply source 10, so as to always receive power from the power supply source 10. The second power supply portion 412 may be a power converter for converting power supplied from the power supply source 10 to the second power. The second power supply portion 413 may convert power, which is supplied from the power supply source 10 at all times, into the second power, and transfer the second power to the display unit 300 and the driving controller 430.

The operation performing portion 414 may operate by receiving the first power from the first power supply portion 412. The operation performing portion 414 may be a control part that controls the operation unit 200 by receiving the first power. The operation performing portion 414 may control the operations of the first opening and closing portion 411, the first power source portion 412, and the second power source portion 413 when it operates by receiving the first power. The operation performing portion 414 may communicate with the driving controller 430 to control the operation controller 410 according to a result of the communication. The operation performing portion 414 may receive the signal from the driving controller 430 and control the operation controller 410 according to the signal.

In the controller 400, the display controller 420 may be driven by power received from the operation controller 410 through the driving controller 420, to control the display unit 300 to display information related to the laundry treating apparatus 1000. That is, the driving controller 420 may transfer power received from the operation controller 410 to the display controller 420. The display controller 420 may operate by power received from the driving controller 420. The display controller 420 may include a conversion portion 421 to convert power received from the driving controller 430 into driving power of the display controller 420, and a display performing portion 422 to control the display controller 420 by receiving the driving power from the conversion portion 421.

The conversion portion 421 may be a power converter that converts power received from the driving controller 430 into the driving power. The conversion portion 421 may convert a voltage of power received from the driving controller 430. The conversion portion 421 may convert power, which is received from the driving controller 430, into the driving power, when the laundry treating apparatus 1000 is turned on, and supply the converted driving power to the display performing portion 422.

The display performing portion 422 may operate by receiving the driving power from the conversion portion 421. The display performing portion 422 may be a control part that operates by receiving the driving power so as to control the display unit 300. The display performing portion 422 may communicate with the input unit 100 and the driving controller 430 to control the display controller 420 according to a result of the communication.

In the controller 400, the driving controller 430 may be driven by power supplied from the operation controller 410 to control the operations of the operation controller 410 and the display controller 420, thereby controlling the operation of the control device 400. That is, the driving controller 430 may always receive power from the operation controller 410, and operate by the power received from the operation controller 410 at all times. The driving controller 430 may include a supply portion 431 to receive power from the operation controller 410 and convert the received power into driving power of the driving controller 430, a second opening and closing portion 432 to connect or disconnect the operation controller 410 and the display controller 420, a third opening and closing portion 433 to connect or disconnect the supply portion 431 and the input unit 100, and a driving performing portion 434 to operate by receiving driving power from the supply portion to perform the control of the driving controller 430.

The supply portion 431 may be a power converter that converts power received from the driving controller 430 into driving power. The supply portion 431 may convert a voltage of power received from the driving controller 430. The supply portion 431 may convert power, which is received from the driving controller 430 at all times, into the driving power, and supply the converted driving power to the display performing portion 434. The supply portion 431 may also deliver power to each of the display controller 420 and the input unit 100 according to the operations of the second opening and closing portion 432 and the third opening and closing portion 433.

The second opening and closing portion 432 may be an opening and closing mechanism which is disposed between the operation controller 410 and the display controller 420 to connect or disconnect the operation controller 410 to or from the display controller 420. The second opening and closing portion 432 may be controlled by the driving performing portion 434 to connect or disconnect the operation controller 410 to or from the display controller 420. The second opening and closing portion 432 may be controlled by the driving performing portion 434 according to the driving state of the laundry treating apparatus 1000. The second opening and closing portion 432 may disconnect the operation controller 410 from the display controller 420 when the laundry treating apparatus 1000 is turned off and is in the standby state, while connecting the operation controller 410 to the display controller 420 when the laundry treating apparatus 1000 is turned on.

The third opening and closing portion 433 may be an opening and closing mechanism which is disposed between the supply portion 431 and the input unit 100 to connect or disconnect the supply portion 431 to or from the input unit 100. The third opening and closing portion 433 may be controlled by the driving performing portion 434 to connect or disconnect the supply portion 431 to or from the input unit 100. The third opening and closing portion 433 may be controlled by the driving performing portion 434 according to the driving state of the laundry treating apparatus 1000. The third opening and closing portion 433 may disconnect the supply portion 431 from the input unit 100 when the laundry treating apparatus 1000 is turned off and is in the standby state, while connecting the supply portion 431 to the input unit 100 when the laundry treating apparatus 1000 is turned on.

The driving performing portion 434 may operate by receiving driving power from the supply portion 431. The driving performing portion 434 may be a control part that receives the driving power to control the operations of the first opening and closing portion 411, the second opening and closing portion 432, and the third opening and closing portion 433. The driving performing portion 434 may communicate with the input unit 100, the operation controller 410, and the display controller 420, to transmit a result of the communication to at least one of the input unit 100, the operation controller 410, and the display controller 420. The driving performing portion 434 may also receive a signal from the input unit 100. The driving performing portion 434 may receive the signal from the input unit 100 and transfer the signal to the operation controller 410. The driving performing portion 434 may change an operation mode according to the driving state of the laundry treating apparatus 1000. The driving performing portion 434 may control each of the second opening and closing portion 432 and the third opening and closing portion 433 according to the driving state of the laundry treating apparatus 1000. The driving performing portion 434 may control the second opening and closing unit 432 to be opened to disconnect the operation controller 410 from the display controller 420 when the laundry treating apparatus 1000 is turned off and is in the standby state, while controlling the second opening and closing portion 432 to be closed to connect the operation controller 410 to the display controller 420 when the laundry treating apparatus 1000 is turned on. The driving performing portion 434 may control the third opening and closing portion 433 to be opened to disconnect the supply portion 431 from the input unit 100 when the laundry treating apparatus 1000 is turned off and is in the standby state, while controlling the third opening and closing portion 433 to be closed to connect the supply portion 431 to the input unit 100 when the laundry treating apparatus 1000 is turned on.

The embodiments of the device for controlling the laundry treating apparatus and the laundry treating apparatus having the same as described above may be carried out independently or in combination. In addition, the embodiments of the laundry treating apparatus and the control device thereof according to the present disclosure will be practiced by being applied to a control device, a control system, and a control method for every washing machine, a control device, a control system, and a control method of every drying machine, and the like, to which the technical features of this specification can be applied. In particular, the present disclosure may be usefully applied to a laundry treating apparatus employing Artificial Intelligence (Al), a control device and control system for the laundry treating apparatus employing the AI function, a control method of the laundry treating apparatus employing the AI function, and the like. However, the technology described herein may not be limited to this, but may be embodied in a technical field of every laundry treating apparatus to which the technical scope of this specification can be applied.

## Claims

1. A control device (400) for controlling a laundry treating apparatus (1000) comprising an input unit (100) configured to receive a signal for an operation command, an operation unit (200) configured to perform the operation according to the signal, and a display unit (300) configured to display information related to the operation, the control device (400) comprising:
an operation controller (410) configured to receive power for driving the laundry treating apparatus (1000) from an external power supply source (10) and control the operation unit (200) to control the operation of the laundry treating apparatus (1000);
a display controller (420) configured to be driven by the power transferred from the operation controller (410) and control the display unit (300) to display the information related to the operation of the laundry treating apparatus (1000); and
a driving controller (430) configured to be driven by the power transferred from the operation controller (410) and control a power supply to each of the input unit (100), the operation controller (410), and the display controller (420) according to a driving state of the laundry treating apparatus (1000), so as to control an operation of each of the input unit (100), the operation controller (410), and the display controller (420);
wherein the driving controller (430) comprises:
a supply portion (431) configured to receive power transferred from the operation controller (410) and convert the received power into driving power of the driving controller (430);
a second opening and closing portion (432) configured to connect or disconnect the operation controller (410) to or from the display controller (420); and
a third opening and closing portion (433) configured to connect or disconnect the supply portion (431) to or from the input unit (100); and
a driving performing portion (434) configured to be driven by receiving the driving power from the supply portion (431) to perform the control of the driving controller (430), and to control each of the second opening and closing portion (432) and the third opening and closing portion (433) according to a driving state of the laundry treating apparatus (1000),
wherein the third opening and closing portion (433) is configured to disconnect the supply portion (431) from the input unit (100) when the laundry treating apparatus (1000) is turned off and is in the standby state, and to connect the supply portion (431) to the input unit (100) when the laundry treating apparatus (1000) is turned on.

2. The control device (400) of claim 1, wherein the input unit (100) comprises at least one of:
a communication portion (110) configured to communicate with a communication target device of the laundry treating apparatus (1000) to receive a control signal input for the operation command from the communication target device; and
a voice recognition portion (120) configured to recognize the operation command based on a voice signal when the voice signal is input for the operation command.

3. The control device (400) of claim 1 or 2, wherein the input unit stops a power transfer when the laundry treating apparatus (1000) is turned off, and is driven by receiving power when the laundry treating apparatus (1000) is in a standby state.

4. The control device (400) of any one of claims 1, 2 or 3, wherein the operation controller (410) comprises:
a first opening and closing portion (411) configured to connect or disconnect the power supply source (10) to or from a first power supply portion (412);
the first power supply portion (412) configured to convert the power supplied from the power supply source (10) into first power; a second power supply portion (413) configured to convert the power supplied from the power supply source (10) into second power; and
an operation performing portion (414) configured to be driven by receiving the first power from the first power supply portion (412) so as to perform the control of the operation controller (430).

5. The control device (400) of claim 4, wherein the first power supply portion (412) is configured to receive the power supplied from the power supply source (10) when the power supply source (10) is connected thereto by the first opening and closing portion (411), to convert the received power into the first power, and to supply the first power to the operation unit (200) and the operation performing portion (414).

6. The control device (400) of claim 4 or 5, wherein the second power supply portion (413) is configured to receive the power from the power supply source (10) at all times, to convert the received power into the second power, and to transfer the second power to the display unit (300) and the driving controller (430).

7. The control device (400) of any one of claims 4 to 6, wherein the operation performing portion (414) is configured to communicate with the driving controller (430) to perform the control of the operation controller (410) according to a result of the communication.

8. The control device (400) of any one of the preceding claims, wherein the display controller (420) comprises at least one of:
a conversion portion (421) configured to receive power from the driving controller (430) and convert the power into driving power of the display controller (420); and a display performing portion (422) configured to be driven by receiving the driving power from the conversion portion (421) to perform the control of the display controller (420).

9. The control device (400) of claim 8, wherein the conversion portion (421) is configured to receive the power from the driving controller (430) when the laundry treating apparatus (1000) is turned on, to convert the received power into the driving power, and supply the driving power to the display performing portion (422).

10. The control device (400) of claim 8 or 9, wherein the display performing portion (422) is configured to communicate with the input unit (100) and the driving controller (430) to perform the control of the operation controller (410) according to a result of the communication.

11. The control device (400) of any one of the preceding claims, wherein the supply portion (431) is configured to receive power from the driving controller (430) at all times, to convert the received power into the driving power, and to supply the driving power to the driving performing portion (434).

12. The control device (400) of claim 11, wherein the second opening and closing portion (432) is configured to disconnect the operation controller (410) from the display controller (420) when the laundry treating apparatus (1000) is turned off and is in a standby state, and to connect the operation controller (410) to the display controller (420) when the laundry treating apparatus (1000) is turned on.

13. A laundry treating apparatus (1000), comprising:
an input unit (100) configured to receive a signal input for an operation command;
an operation unit (200) configured to perform the operation according to the signal;
a display unit (300) configured to display information related to the operation; and
a controller (400) configured to control the operation unit (200) and the display unit (300) so as to control the operation,
wherein the controller (400) is the control device (400) for controlling the laundry treating apparatus according to any of claims 1 to 12.

## Patentansprüche

1. Steuervorrichtung (400) zum Steuern einer Wäschebehandlungsvorrichtung (1000), die eine Eingabeeinheit (100), die konfiguriert ist, ein Signal für einen Betriebsbefehl zu empfangen, eine Betriebseinheit (200), die konfiguriert ist, den Betrieb entsprechend dem Signal durchzuführen, und eine Anzeigeeinheit (300), die konfiguriert ist, Anzeigeinformationen bezüglich des Betriebs anzuzeigen, umfasst, wobei die Steuervorrichtung (400) Folgendes umfasst:
eine Betriebssteuereinheit (410), die konfiguriert ist, Leistung zum Ansteuern der Wäschebehandlungsvorrichtung (1000) von einer externen Leistungsversorgungsquelle (10) zu empfangen, und die Betriebseinheit (200) zu steuern, um den Betrieb der Wäschebehandlungsvorrichtung (1000) zu steuern;
eine Anzeigesteuereinheit (420), die konfiguriert ist, durch die von der Betriebssteuereinheit (410) übertragene Leistung angesteuert zu werden, und die Anzeigeeinheit (300) zu steuern, um die Informationen bezüglich des Betriebs der Wäschebehandlungsvorrichtung (1000) anzuzeigen; und
eine Ansteuerungssteuereinheit (430), die konfiguriert ist, durch die von der Betriebssteuereinheit (410) übertragene Leistung angesteuert zu werden, und eine Leistungsversorgung zu der Eingabeeinheit (100), der Betriebssteuereinheit (410) und der Anzeigesteuereinheit (420) entsprechend einem Ansteuerungszustand der Wäschebehandlungsvorrichtung (1000) zu steuern, um einen Betrieb der Eingabeeinheit (100), der Betriebssteuereinheit (410) und der Anzeigesteuereinheit (420) zu steuern;
wobei die Ansteuerungssteuereinheit (430) Folgendes umfasst:
einen Versorgungsabschnitt (431), der konfiguriert ist, von der Betriebssteuereinheit (410) übertragene Leistung zu empfangen und die empfangene Leistung in Ansteuerungsleistung der Ansteuerungssteuereinheit (430) umzusetzen;
einen zweiten Öffnungs- und Schließabschnitt (432), der konfiguriert ist, die Betriebssteuereinheit (410) mit der Anzeigesteuereinheit (420) zu verbinden oder von dieser zu trennen; und
einen dritten Öffnungs- und Schließabschnitt (433), der konfiguriert ist, den Versorgungsabschnitt (431) mit der Eingabeeinheit (100) zu verbinden oder davon zu trennen; und
einen Ansteuerungsdurchführungsabschnitt (434), der konfiguriert ist, durch Empfangen der Ansteuerungsleistung von dem Versorgungsabschnitt (431) angesteuert zu werden, um die Steuerung der Ansteuerungssteuereinheit (430) durchzuführen und sowohl den zweiten Öffnungs- und Schließabschnitt (432) als auch den dritten Öffnungs- und Schließabschnitt (433) entsprechend einem Ansteuerungszustand der Wäschebehandlungsvorrichtung (1000) zu steuern,
wobei der dritte Öffnungs- und Schließabschnitt (433) konfiguriert ist, den Versorgungsabschnitt (431) von der Eingabeeinheit (100) zu trennen, wenn die Wäschebehandlungsvorrichtung (1000) ausgeschaltet wird und sich im Bereitschaftszustand befindet, und den Versorgungsabschnitt (431) mit der Eingabeeinheit (100) zu verbinden, wenn die Wäschebehandlungsvorrichtung (1000) eingeschaltet wird.

2. Steuervorrichtung (400) nach Anspruch 1, wobei die Eingabeeinheit (100) Folgendes umfasst:
einen Kommunikationsabschnitt (110), der konfiguriert ist, mit einer Kommunikationszielvorrichtung der Wäschebehandlungsvorrichtung (1000) zu kommunizieren, um eine Steuersignaleingabe für den Betriebsbefehl von der Kommunikationszielvorrichtung zu empfangen; und/oder
einen Spracherkennungsabschnitt (120), der konfiguriert ist, den Betriebsbefehl basierend auf einem Sprachsignal zu erkennen, wenn das Sprachsignal für den Betriebsbefehl eingegeben wird.

3. Steuervorrichtung (400) nach Anspruch 1 oder 2, wobei die Eingabeeinheit eine Leistungsübertragung beendet, wenn die Wäschebehandlungsvorrichtung (1000) ausschaltet wird, und durch das Empfangen von Leistung angesteuert wird, wenn sich die Wäschebehandlungsvorrichtung (1000) in einem Bereitschaftszustand befindet.

4. Steuervorrichtung (400) nach einem der Ansprüche 1, 2 oder 3, wobei die Betriebssteuereinheit (410) Folgendes umfasst:
einen ersten Öffnungs- und Schließabschnitt (411), der konfiguriert ist, die Leistungsversorgungsquelle (10) mit einem ersten Leistungsversorgungsabschnitt (412) zu verbinden oder davon zu trennen;
den ersten Leistungsversorgungsabschnitt (412), der konfiguriert ist, die Leistung, die von der Leistungsversorgungsquelle (10) zugeführt worden ist, in eine erste Leistung umzusetzen;
einen zweiten Leistungsversorgungsabschnitt (413), der konfiguriert ist, die Leistung, die von der Leistungsversorgungsquelle (10) zugeführt worden ist, in eine zweite Leistung umzusetzen; und
einen Betriebsdurchführungsabschnitt (414), der konfiguriert ist, durch Empfangen der ersten Leistung von dem ersten Leistungsversorgungsabschnitt (412) angesteuert zu werden, um die Steuerung der Betriebssteuereinheit (430) durchzuführen.

5. Steuervorrichtung (400) nach Anspruch 4, wobei der erste Leistungsversorgungsabschnitt (412) konfiguriert ist, die Leistung, die von der Leistungsversorgungsquelle (10) zugeführt wird, zu empfangen, wenn die Leistungsversorgungsquelle (10) damit durch den ersten Öffnungs- und Schließabschnitt (411) verbunden wird, um die empfangene Leistung in die erste Leistung umzusetzen, und die erste Leistung der Betriebseinheit (200) und dem Betriebsdurchführungsabschnitt (414) zuzuführen.

6. Steuervorrichtung (400) nach Anspruch 4 oder 5, wobei der zweite Leistungsversorgungsabschnitt (413) konfiguriert ist, zu jeder Zeit die Leistung von der Leistungsversorgungsquelle (10) zu empfangen, um die empfangene Leistung in die zweite Leistung umzusetzen, und die zweite Leistung zu der Anzeigeeinheit (300) und der Ansteuerungssteuereinheit (430) zu übertragen.

7. Steuervorrichtung (400) nach einem der Ansprüche 4 bis 6, wobei der Betriebsdurchführungsabschnitt (414) konfiguriert ist, mit der Ansteuerungssteuereinheit (430) zu kommunizieren, um die Steuerung der Betriebssteuereinheit (410) entsprechend einem Ergebnis der Kommunikation durchzuführen.

8. Steuervorrichtung (400) nach einem der vorhergehenden Ansprüche, wobei die Anzeigesteuereinheit (420) Folgendes umfasst:
einen Umsetzungsabschnitt (421), der konfiguriert ist, Leistung von der Ansteuerungssteuereinheit (430) zu empfangen und die Leistung in Ansteuerungsleistung der Anzeigesteuereinheit (420) umzusetzen; und/oder
einen Anzeigedurchführungsabschnitt (422), der konfiguriert ist, durch das Empfangen der Ansteuerungsleistung von dem Umsetzungsabschnitt (421) angesteuert zu werden, um die Steuerung der Anzeigesteuereinheit (420) durchzuführen.

9. Steuervorrichtung (400) nach Anspruch 8, wobei der Umsetzungsabschnitt (421) konfiguriert ist, die Leistung von der Ansteuerungssteuereinheit (430) zu empfangen, wenn die Wäschebehandlungsvorrichtung (1000) eingeschaltet wird, die empfangene Leistung in die Ansteuerungsleistung umzusetzen, und den Anzeigedurchführungsabschnitt (422) mit der Ansteuerungsleistung zu versorgen.

10. Steuervorrichtung (400) nach Anspruch 8 oder 9, wobei der Anzeigedurchführungsabschnitt (422) konfiguriert ist, mit der Eingabeeinheit (100) und der Ansteuerungssteuereinheit (430) zu kommunizieren, um die Steuerung der Betriebssteuereinheit (410) entsprechend einem Ergebnis der Kommunikation durchzuführen.

11. Steuervorrichtung (400) nach einem der vorhergehenden Ansprüche, wobei der Versorgungsabschnitt (431) konfiguriert ist, zu jeder Zeit von der Ansteuerungssteuereinheit (430) Leistung zu empfangen, um die empfangene Leistung in die Ansteuerungsleistung umzusetzen, und den Ansteuerungsdurchführungsabschnitt (434) mit der Ansteuerungsleistung zu versorgen.

12. Steuervorrichtung (400) nach Anspruch 11, wobei der zweite Öffnungs- und Schließabschnitt (432) konfiguriert ist, die Betriebssteuereinheit (410) von der Anzeigesteuereinheit (420) zu trennen, wenn die Wäschebehandlungsvorrichtung (1000) ausgeschaltet wird und sich in einem Bereitschaftszustand befindet, und die Betriebssteuereinheit (410) mit der Anzeigesteuereinheit (420) zu verbinden, wenn die Wäschebehandlungsvorrichtung (1000) eingeschaltet wird.

13. Wäschebehandlungsvorrichtung (1000), die Folgendes umfasst:
eine Eingabeeinheit (100), die konfiguriert ist, eine Signaleingabe für einen Betriebsbefehl zu empfangen;
eine Betriebseinheit (200), die konfiguriert ist, den Betrieb entsprechend dem Signal durchzuführen;
eine Anzeigeeinheit (300), die konfiguriert ist, Anzeigeinformationen bezüglich des Betriebs anzuzeigen; und
eine Steuereinheit (400), die konfiguriert ist, die Betriebseinheit (200) und die Anzeigeeinheit (300) zu steuern, um den Betrieb zu steuern,
wobei die Steuereinheit (400) die Steuervorrichtung (400) zum Steuern der Wäschebehandlungsvorrichtung nach einem der Ansprüche 1 bis 12 ist.

## Revendications

1. Dispositif de commande (400) pour commander un appareil de traitement de linge (1000) comportant une unité d'entrée (100) configurée pour recevoir un signal pour une instruction de fonctionnement, une unité de mise en fonctionnement (200) configurée pour mettre en oeuvre le fonctionnement en fonction du signal, et une unité d'affichage (300) configurée pour afficher des informations associées au fonctionnement, le dispositif de commande (400) comportant :
une commande de fonctionnement (410) configurée pour recevoir de l'énergie destinée à piloter l'appareil de traitement de linge (1000) à partir d'une source d'alimentation en énergie externe (10) et commander à l'unité de mise en fonctionnement (200) de commander le fonctionnement de l'appareil de traitement de linge (1000) ;
une commande d'affichage (420) configurée pour être pilotée par l'énergie transférée à partir de la commande de fonctionnement (410) et commander à l'unité d'affichage (300) d'afficher les informations associées au fonctionnement de l'appareil de traitement de linge (1000) ; et
une commande de pilotage (430) configurée pour être pilotée par l'énergie transférée à partir de la commande de fonctionnement (410) et commander une alimentation en énergie de chaque élément parmi l'unité d'entrée (100), la commande de fonctionnement (410) et la commande d'affichage (420) en fonction d'un état de pilotage de l'appareil de traitement de linge (1000), de manière à commander un fonctionnement de chaque élément parmi l'unité d'entrée (100), la commande de fonctionnement (410) et la commande d'affichage (420) ;
dans lequel la commande de pilotage (430) comporte :
une partie d'alimentation (431) configurée pour recevoir de l'énergie transférée à partir la commande de fonctionnement (410) et convertir l'énergie reçue en énergie de pilotage de la commande de pilotage (430) ;
une deuxième partie d'ouverture et de fermeture (432) configurée pour connecter la commande de fonctionnement (410) à la commande d'affichage (420) ou la déconnecter de celle-ci ; et
une troisième partie d'ouverture et de fermeture (433) configurée pour connecter la partie d'alimentation (431) à l'unité d'entrée (100) ou la déconnecter de celle-ci ; et
une partie de mise en oeuvre du pilotage (434) configurée pour être pilotée en recevant l'énergie de pilotage provenant de la partie d'alimentation (431) pour mettre en oeuvre la commande de la commande de pilotage (430), et pour commander chaque élément parmi la deuxième partie d'ouverture et de fermeture (433) et la troisième partie d'ouverture et de fermeture (433) en fonction d'un état de pilotage de l'appareil de traitement de linge (1000),
dans lequel la troisième partie d'ouverture et de fermeture (433) est configurée pour déconnecter la partie d'alimentation (431) de l'unité d'entrée (100) lorsque l'appareil de traitement de linge (1000) est éteint et est dans l'état d'attente, et pour connecter la partie d'alimentation (431) à l'unité d'entrée (100) lorsque l'appareil de traitement de linge (1000) est mis en marche.

2. Dispositif de commande (400) selon la revendication 1, dans lequel l'unité d'entrée (100) comporte au moins une partie parmi :
une partie de communication (110) configurée pour communiquer avec un dispositif cible de communication de l'appareil de traitement de linge (1000) pour recevoir une entrée de signal de commande pour l'instruction de fonctionnement provenant du dispositif cible de communication ; et
une partie de reconnaissance vocale (120) configurée pour reconnaître l'instruction de fonctionnement sur la base d'un signal vocal lorsque le signal vocal est appliqué à l'entrée pour l'instruction de fonctionnement.

3. Dispositif de commande (400) selon la revendication 1 ou 2, dans lequel l'unité d'entrée arrête un transfert d'énergie lorsque l'appareil de traitement de linge (1000) est éteint, et est pilotée en recevant de l'énergie lorsque l'appareil de traitement de linge (1000) est dans un état d'attente.

4. Dispositif de commande (400) selon l'une quelconque des revendications 1, 2 ou 3, dans lequel la commande de fonctionnement (410) comporte :
une première partie d'ouverture et de fermeture (411) configurée pour connecter la source d'alimentation en énergie (10) à une première partie d'alimentation en énergie (412) ou la déconnecter de celle-ci ; et
la première partie d'alimentation en énergie (412) configurée pour convertir l'énergie fournie à partir de la source d'alimentation en énergie (10) en première énergie ; une seconde partie d'alimentation en énergie (413) configurée pour convertir l'énergie fournie à partir de la source d'alimentation en énergie (10) en seconde énergie ; et
une partie de mise en oeuvre du fonctionnement (414) configurée pour être pilotée en recevant la première énergie provenant de la première partie d'alimentation en énergie (410) de manière à mettre en oeuvre la commande de la commande de fonctionnement (430).

5. Dispositif de commande (400) selon la revendication 4, dans lequel la première partie d'alimentation en énergie (412) est configurée pour recevoir l'énergie fournie à partir de la source d'alimentation en énergie (10) lorsque la source d'alimentation en énergie (10) est connectée à celle-ci par la première partie d'ouverture et de fermeture (411), pour convertir l'énergie reçue en première énergie, et pour fournir la première énergie à l'unité de mise en fonctionnement (200) et à la partie de mise en oeuvre du fonctionnement (414).

6. Dispositif de commande (400) selon la revendication 4 ou 5, dans lequel la seconde partie d'alimentation en énergie (413) est configurée pour recevoir à tout moment l'énergie provenant de la source d'alimentation en énergie (10), pour convertir l'énergie reçue en seconde énergie, et pour transférer la seconde énergie vers l'unité d'affichage (300) et la commande de pilotage (430).

7. Dispositif de commande (400) selon l'une quelconque des revendications 4 à 6, dans lequel la partie de mise en oeuvre du fonctionnement (414) est configurée pour communiquer avec la commande de pilotage (430) pour mettre en oeuvre la commande de la commande de fonctionnant (410) en fonction d'un résultat de la communication.

8. Dispositif de commande (400) selon l'une quelconque des revendications précédentes, dans lequel la commande d'affichage (420) comporte au moins une partie parmi :
une partie de conversion (421) configurée pour recevoir de l'énergie provenant de la commande de pilotage (430) et convertir l'énergie en énergie de pilotage de la commande d'affichage (420) ; et une partie de mise en oeuvre de l'affichage (422) configurée pour être pilotée en recevant l'énergie de pilotage provenant de la partie de conversion (421) pour mettre en oeuvre la commande de la commande d'affichage (420).

9. Dispositif de commande (400) selon la revendication 8, dans lequel la partie de conversion (421) est configurée pour recevoir l'énergie provenant de la commande de pilotage (430) lorsque l'appareil de traitement de linge (1000) est mis en marche, pour convertir l'énergie reçue en énergie de pilotage, et fournir l'énergie de pilotage à la partie de mise en oeuvre de l'affichage (422).

10. Dispositif de commande (400) selon la revendication 8 ou 9, dans lequel la partie de mise en oeuvre de l'affichage (422) est configurée pour communiquer avec l'unité d'entrée (100) et la commande de pilotage (430) pour mettre en oeuvre la commande de la commande de fonctionnement (410) en fonction d'un résultat de la communication.

11. Dispositif de commande (400) selon l'une quelconque des revendications précédentes, dans lequel la partie d'alimentation (431) est configurée pour recevoir à tout moment de l'énergie provenant de la commande de pilotage (430), pour convertir l'énergie reçue en énergie de pilotage, et fournir l'énergie de pilotage à la partie de mise en oeuvre du pilotage (434).

12. Dispositif de commande (400) selon la revendication 11, dans lequel la deuxième partie d'ouverture et de fermeture (432) est configurée pour déconnecter la commande de fonctionnement (410) de la commande d'affichage (420) lorsque l'appareil de traitement de linge (1000) est éteint et est dans un état d'attente, et pour connecter la commande de fonctionnement (410) à la commande d'affichage (420) lorsque l'appareil de traitement de linge (1000) est mis en marche.

13. Appareil de traitement de linge (1000), comportant :
une unité d'entrée (100) configurée pour recevoir un signal d'entrée pour une instruction de fonctionnement ;
une unité de mise en fonctionnement (200) configurée pour mettre en oeuvre le fonctionnement en fonction du signal ;
une unité d'affichage (300) configurée pour afficher des informations associées au fonctionnement, et
une commande (400) configurée pour commander l'unité de mise en fonctionnement (200) et l'unité d'affichage (300) de manière à commander le fonctionnement,
dans lequel la commande (400) est le dispositif de commande (400) destiné à commander l'appareil de traitement de linge selon l'une quelconque des revendications 1 à 12.
